# EUROPÄISCHE PATENTSCHRIFT

(11) **EP 3 326 040 B1**
(45) Veröffentlichungstag und Bekanntmachung des Hinweises auf die Patenterteilung: **27.04.2022**
(21) Anmeldenummer: 16735646.8
(22) Anmeldetag: 05.07.2016
(51) Int. Cl.: G05D 1/02, B60W 60/00

(54) **VERFAHREN UND SYSTEM ZUR AUTOMATISCHEN STEUERUNG ZUMINDEST EINES FOLGEFAHRZEUGS MIT EINEM SCOUT-FAHRZEUG**
METHOD AND SYSTEM FOR AUTOMATIC CONTROL OF AT LEAST ONE FOLLOWING VEHICLE WITH A SCOUT VEHICLE
PROCÉDÉ ET SYSTÈME POUR LA COMMANDE AUTOMATIQUE D'AU MOINS UN VÉHICULE SUIVEUR AVEC UN VÉHICULE ÉCLAIREUR

(30) Priorität: 21.07.2015 DE 102015213743
(43) Veröffentlichungstag der Anmeldung: 30.05.2018
(73) Patentinhaber: VOLKSWAGEN AKTIENGESELLSCHAFT, 38440 Wolfsburg (DE)
(72) Erfinder: MEINECKE, Marc-Michael, 38524 Sassenburg (DE); BARTELS, Arne, 38448 Wolfsburg (DE); JUNGE, Lutz, 38106 Braunschweig (DE); DARMS, Michael, 71083 Herrenberg (DE)
(86) Internationale Anmeldenummer: PCT/EP2016/065752
(87) Internationale Veröffentlichungsnummer: WO 2017/012851

(56) Entgegenhaltungen:
- DE-A1- 19 949 448
- DE-A1-102007 036 248
- DE-A1-102010 007 240
- DE-A1-102012 009 238
- DE-A1-102012 208 256

## Beschreibung

Die Erfindung betrifft ein Verfahren zur automatischen Steuerung zumindest eines Folgefahrzeugs. Sie betrifft ferner ein System zur automatischen Steuerung zumindest eines Folgefahrzeugs mit einem Scout-Fahrzeug.

Zur Steigerung der Effizienz und Sicherheit im Verkehr und in der Logistik, insbesondere beim Transport von Gütern, aber auch im Personentransportwesen, wird eine weitreichende Automatisierung von Fahrzeugen angestrebt. Dazu sind bereits Techniken bekannt, die durch automatische Eingriffe auf verschiedenen Ebenen in die Steuerung eines Fahrzeugs den Fahrer entlasten oder einzelne Fahrmanöver vollautomatisch durchführen. Dies reicht von einer Fernsteuerung bis zum autonomen Abfahren einer Route durch ein Fahrzeug.

Die DE 10 2005 059 517 A1 beschreibt ein solches System zum Führen und Operieren eines Fahrzeugs ohne Fahrer, wobei Daten von Sensoren des Fahrzeugs zu einer Einsatzzentrale weitergeleitet werden und von der Einsatzzentrale Einsatzdaten zur Steuerung des Fahrzeugs auf dieses übertragen werden. Dabei wird eine Datenübertragung zwischen Fahrzeug und Einsatzzentrale in annähernder Echtzeit vorausgesetzt bzw. eine eventuell auftretende Zeitverzögerung wird technisch kompensiert.

Bei dem in der DE 10 2013 212 255 A1 beschriebenen Verfahren überprüft ein erstes Fahrzeug mit einer Sensorik einen Raum relativ zum ersten Fahrzeug und überträgt das Ergebnis der Überprüfung an ein zweites Fahrzeug. Dadurch kann diesem beispielsweise mitgeteilt werden, ob ein Raum in der Umgebung des ersten Fahrzeugs frei ist und ob ein Einscheren durchgeführt werden kann.

Bei dem in der DE 10 2013 225 011 A1 beschriebenen Verfahren wird in einem hochautomatisiert fahrenden Kraftfahrzeug die eigene Position mit externen Daten über eine aktuelle Verkehrssituation abgeglichen und entschieden, ob eine Änderung des Fahrzustands erforderlich ist. Insbesondere wird erkannt, ob das Fahrzeug auf ein Hindernis oder einen anderweitig nicht automatisch befahrbaren Streckenabschnitt zufährt. Dies kann etwa zum Abbruch der automatisierten Fahrt führen. Beispielsweise kann eine Sperrung eines vor dem Fahrzeug liegenden Streckenabschnitts für die automatisierte Fahrt verarbeitet werden oder es kann eine Staumeldung zum rechtzeitigen Abbruch der hochautomatisierten Fahrt dienen.

Aus der DE 10 2012 208 256 A1 ist zudem ein Verfahren zur automatischen Steuerung eines Folgefahrzeugs durch ein Scout-Fahrzeug bekannt. Hierbei wird eine Ist-Trajektorie des Scout-Fahrzeugs erfasst und an das Folgefahrzeug übertragen. Das Scout-Fahrzeug erfasst ebenfalls Umgebungsdaten. Darüber hinaus erfasst das Folgefahrzeug Umgebungsdaten und erhält dadurch die Ist-Trajektorie des Scout-Fahrzeugs.

Eine zentrale Voraussetzung für den sicheren Betrieb derartiger Systeme ist allerdings eine hohe Redundanz bei den verwendeten Sicherungsvorkehrungen. Typischerweise setzt die automatische Durchführung eines Fahrmanövers die Anwesenheit eines Fahrers voraus, der die Bewegung des Fahrzeugs überwacht und korrigierend eingreifen kann. Dies beugt insbesondere Fehlfunktionen des Systems vor, etwa bei defekten Sensoren oder in ungewöhnlichen Verkehrssituationen.

Soll das System betrieben werden, ohne dass für jedes Fahrzeug ein Fahrer vorgesehen ist, so müssen hochgradige Redundanzen auf technischer Ebene vorgesehen sein. Dies wird etwa durch den Einbau einer Vielzahl von - teils mehrfach ausgelegten - Sensoren im Fahrzeug erreicht. Dabei sind allerdings die Möglichkeiten der Integration von Sensoren in einem Fahrzeug räumlich beschränkt, ferner können beträchtliche Zusatzkosten entstehen.

Der vorliegenden Erfindung liegt die Aufgabe zugrunde, ein Verfahren und ein System zur automatischen Steuerung zumindest eines Folgefahrzeugs bereitzustellen, bei denen eine durch Redundanz abgesicherte, hochgradig automatisierte Steuerung erreicht wird. Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird für ein Scout-Fahrzeug eine Scout-Trajektorie erzeugt. Das Scout- Fahrzeug wird entlang einer Ist-Trajektorie geführt, wobei mittels Sensoren des Scout-Fahrzeugs die Ist-Trajektorie des Scout-Fahrzeugs und Scout-Umgebungsdaten erfasst werden. Für das Folgefahrzeug wird eine Soll-Trajektorie erzeugt und es werden mittels Sensoren des Folgefahrzeugs Folgefahrzeug-Umgebungsdaten erfasst. Anschließend wird die Ist-Trajektorie an das Folgefahrzeug übertragen. Wenn die erfasste Ist-Trajektorie und die Soll-Trajektorie des Folgefahrzeugs jeweils zumindest eine bestimmte Trajektorienähnlichkeit aufweisen und wenn die Folgefahrzeug-Umgebungsdaten zumindest eine bestimmte Umgebungsdatenähnlichkeit zu den Scout-Umgebungsdaten aufweisen, wird eine automatische Steuerung des Folgefahrzeugs entlang der Soll-Trajektorie aktiviert.

Die zu befahrende Strecke wird also in mehreren Stufen auf ihre Befahrbarkeit überprüft. Durch die Kombination eines Scout-Fahrzeugs, das über die automatische Befahrbarkeit einer Trajektorie entscheidet, und eines Folgefahrzeugs, das die Daten des Scout-Fahrzeugs im Moment des Befahrens überprüft, wird eine hohe Redundanz und damit vorteilhafterweise eine hohe Sicherheit erreicht. Es wird überprüft, ob die Soll-Trajektorie, die automatisch vom Folgefahrzeug befahren werden soll, von dem Scout-Fahrzeug als fahrbar bewertet wurde, und es wird laufend überprüft, ob sich die Bedingungen auf der Strecke seit der Bewertung durch das Scout-Fahrzeug geändert haben.

Als "Trajektorie" wird in dieser Schrift ein Bewegungspfad bezeichnet, entlang dessen eines der beteiligten Fahrzeuge fahren kann. Insbesondere können darunter tatsächlich gefahrene und geplante Bewegungspfade verstanden werden. Insbesondere kann die Trajektorie beliebig lang oder kurz sein, beispielsweise kann sie einen Streckenabschnitt auf einer Fahrbahn oder eine längere Route zwischen zwei geographischen Positionen umfassen.

Im ersten Schritt wird eine Strecke, beispielsweise eine öffentliche Straße, ein Weg innerhalb eines abgeschlossenen Geländes oder in einem Gebäude, von einem Scout-Fahrzeug befahren. Dabei wird zunächst eine Scout-Trajektorie erzeugt, etwa von einem Fahrplaner oder einem Navigationssystem des Scout-Fahrzeugs. Die Scout-Trajektorie entspricht einem errechneten Bewegungspfad des Fahrzeugs. Das Führung des Fahrzeugs erfolgt entlang einer Ist-Trajektorie, die nicht notwendigerweise genau der theoretischen Scout-Trajektorie entspricht. Dies kann beispielsweise dadurch bedingt sein, dass das Fahrzeug Hindernissen, etwa anderen Fahrzeugen, ausweichen muss oder dass die tatsächlichen Gegebenheiten der Strecke nicht exakt den kartographischen Ausgangsdaten für die Planung der Scout-Trajektorie entsprechen. Insbesondere kann eine manuelle Fahrzeugführung erfolgen, etwa durch einen Fahrer oder per Fernsteuerung.

Die Ist-Trajektorie, entlang derer sich das Scout-Fahrzeug tatsächlich bewegt, wird erfasst, wobei etwa satellitengestützte Systeme, aber auch andere, an sich bekannte Verfahren zur Positions- und Routenbestimmung verwendet werden können. Insbesondere wird die Ist-Trajektorie so erfasst, dass ein Abgleich mit der Scout-Trajektorie durchgeführt werden kann. Bei diesem Abgleich wird eine Trajektorienähnlichkeit bestimmt, durch die der Grad der Ähnlichkeit quantitativ angegeben wird. Es kann also überprüft werden, inwieweit die tatsächlich befahrene Ist-Trajektorie mit der automatisch errechneten Scout-Trajektorie übereinstimmt, ob also eine automatische Steuerung anhand der erzeugten Scout-Trajektorie auf eine fahrbare Trajektorie geführt hätte. Insbesondere entspricht dies einem Autopiloten des Fahrzeugs in einem "passiven Testmodus", welcher der Überprüfung der Entscheidungen des Autopiloten dient. Die erzeugte Scout-Trajektorie muss ausreichend ähnlich zu der tatsächlich gefahrenen Ist-Trajektorie sein, um als befahrbar bewertet zu werden.

Ferner umfasst das Scout-Fahrzeug Sensoren, durch die Scout-Umgebungsdaten erfasst werden. Diese Umgebungsdaten charakterisieren die befahrene Strecke, sie betreffen also etwa Merkmale des befahrenen Untergrunds, zum Beispiel den Streckenverlauf, Fahrbahnmarkierungen oder den Zustand des Bodenbelags, Hinweisschilder, Bauwerke, Pflanzen und landschaftliche Merkmale in der Umgebung der Strecke. Die verwendeten Sensoren sind an sich bekannt und können beliebig kombiniert werden.

Nachdem das Scout-Fahrzeug die Trajektorie befahren hat, werden die bei dieser Fahrt erfassten Daten verwendet, um zu überprüfen, ob das Folgefahrzeug die Trajektorie ebenfalls befahren kann. Zunächst wird, etwa durch einen Fahrplaner des Folgefahrzeugs, eine Soll-Trajektorie erzeugt, entlang derer das Folgefahrzeug automatisch gesteuert werden soll. Insbesondere können das Scout-Fahrzeug und das Folgefahrzeug ähnliche oder funktionsgleiche Fahrplaner umfassen, die unter den gleichen Bedingungen funktionsbedingt zumindest annähernd identische Trajektorien berechnen. Es können jedoch auch verschiedene Fahrtenplaner verwendet werden.

Im Folgefahrzeug wird die Soll-Trajektorie mit der Scout-Trajektorie verglichen, wobei zumindest Abschnitte der Trajektorien betrachtet werden. Es wird eine Trajektorienähnlichkeit erzeugt, die - analog zum Vergleich der Scout-Trajektorie mit der Ist-Trajektorie - quantitativ den Grad der Ähnlichkeit angibt. Es kann also bestimmt werden, ob die Soll-Trajektorie im Wesentlichen mit der vom Scout-Fahrzeug gefahrenen Scout-Trajektorie übereinstimmt.

Ferner umfasst das Folgefahrzeug analog zum Scout-Fahrzeug Sensoren, durch die Folgefahrzeug-Umgebungsdaten erfasst werden. Diese Sensoren können dabei im Wesentlichen die gleichen Merkmale der Strecke und der Umgebung erfassen wie die Sensoren des Scout-Fahrzeugs, allerdings werden nicht notwendigerweise die gleichen Sensortypen verwendet und die Anzahl der Sensoren kann sich unterscheiden. Wesentlich ist, dass die Folgefahrzeug-Umgebungsdaten und die Scout-Umgebungsdaten vergleichbare Ergebnisse liefern, beispielsweise indem sie die Position von Bauwerken am Rand der Strecke identifizieren.

Die Scout-Umgebungsdaten und die Folgefahrzeug-Umgebungsdaten werden im Folgefahrzeug miteinander verglichen und es wird eine Umgebungsdatenähnlichkeit bestimmt. Durch eine Prüfung der Umgebungsähnlichkeit kann sichergestellt werden, dass sich das Folgefahrzeug tatsächlich auf der gleichen Trajektorie wie das Scout-Fahrzeug befindet und es kann überprüft werden, ob und in wieweit sich die Merkmale der zu befahrenden Strecke verändert haben, nachdem diese von dem Scout-Fahrzeug befahren wurde.

Für die Entscheidung, ob eine Trajektorie sicher automatisch vom Folgefahrzeug befahren werden kann, können etwa Schwellenwerte für die Trajektorienähnlichkeiten und für die Umgebungsdatenähnlichkeit definiert sein. Sind die Ähnlichkeiten groß genug, so wird die automatische Steuerung des Folgefahrzeugs für die Soll-Trajektorie aktiviert bzw. die Trajektorie wird für die automatische Fahrt freigegeben.

Das Folgefahrzeug erfasst insbesondere weitere Daten zur automatischen Steuerung. Dazu können weitere Sensoren vorhanden sein oder es können die gleichen Sensoren wie für den Abgleich mit den Scout-Umgebungsdaten verwendet werden. Beispielsweise können Daten über bewegte Objekte in der näheren Umgebung des Folgefahrzeugs erfasst werden, von denen das Folgefahrzeug Abstand halten oder denen es ausweichen muss. Diese Daten sind für den Abgleich mit den Scout-Umgebungsdaten nicht relevant, da sie keine Merkmale der befahrenen Strecke sind, sondern vom einzelnen Fahrzeug abhängen und sich typischerweise kurzfristig ändern. Wenn das Scout-Fahrzeug ständig überholt wird, kann daraus geschlossen werden, dass die Überholspur ebenfalls für das automatische Fahren genutzt werden kann. In diesem Fall werden zwei freie Trajektoren an das Folgefahrzeug übermittelt.

Bei einer Ausbildung des erfindungsgemäßen Verfahrens wird das Scout-Fahrzeug manuell von einem Scout-Fahrer geführt. Dadurch entscheidet vorteilhafterweise ein menschlicher Fahrer über die Fahrt des Scout-Fahrzeugs. Es wird davon ausgegangen, dass der Scout-Fahrer das Scout-Fahrzeug entlang einer Trajektorie führt, die prinzipiell auch für die automatische Steuerung des Folgefahrzeugs geeignet ist. Der Scout-Fahrer befindet sich insbesondere im Scout-Fahrzeug, allerdings kann das Scout-Fahrzeug auch über eine Fernsteuerung geführt werden, beispielsweise von einer Einsatzzentrale aus, wie in der DE 10 2005 059 517 A1 beschrieben.

Bei einer weiteren Ausbildung wird, falls die Umgebungsdatenähnlichkeit den bestimmten Wert nicht übersteigt, ein sicherer Fahrmodus des Folgefahrzeugs aktiviert. Damit wird vorteilhafterweise erreicht, dass das Folgefahrzeug auf einer für die automatische Steuerung ungeeigneten Trajektorie sicher geführt wird.

Die Umgebungsdatenähnlichkeit kann beispielsweise dann den bestimmten Schwellenwert nicht mehr erreichen, wenn sich die Streckenführung geändert hat, nachdem das Scout-Fahrzeug die Scout-Umgebungsdaten erfasst hat. Beispielsweise kann eine Baustelle oder eine Absperrung bei einem Unfall dazu führen, dass auf eine andere Fahrspur ausgewichen werden muss und die alternative Strecke nicht mehr als automatisch fahrbar bewertet wird. Insbesondere kann in dem sicheren Fahrmodus die Geschwindigkeit des Fahrzeugs verringert werden, gegebenenfalls bis zum Halt des Fahrzeugs an einer geeigneten Stelle. Ferner kann ein Fahrer des n-ten Folgefahrzeugs benachrichtigt werden und die manuelle Steuerung des Folgefahrzeugs übernehmen, wobei sich der Fahrer im Folgefahrzeug befinden kann oder das Folgefahrzeug ferngesteuert werden kann.

Bei einer Weiterbildung umfasst die automatische Steuerung des Folgefahrzeugs eine Steuerung der Bewegung des Folgefahrzeugs in Längs- und Querrichtung. Dadurch können Richtung und Geschwindigkeit des Folgefahrzeugs vorteilhafterweise entlang einer Trajektorie gesteuert werden.

Die Daten, durch welche die Soll-Trajektorie als automatisch fahrbar bewertet wird, können direkt vom Scout-Fahrzeug an das Folgefahrzeug übertragen werden. Typischerweise ergibt sich dabei eine geringe zeitliche Verzögerung zwischen der Erfassung der Scout-Umgebungsdaten und der Folgefahrzeug-Umgebungsdaten. Es ist daher davon auszugehen, dass sich nur geringe Änderungen ergeben, sofern nicht plötzliche Ereignisse, etwa eine Sperrung bei einem Unfall, auftreten.

In einer Ausbildung werden Daten zu der Scout-Trajektorie und/oder Daten zu der Soll-Trajektorie und/oder Scout-Umgebungsdaten und/oder Folgefahrzeug-Umgebungsdaten an einen externen Server übertragen und von dem Server gespeichert. Diese indirekte Übertragung der Daten erlaubt vorteilhafterweise, die jeweiligen Daten an einer zentralen Stelle zu verwalten und flexibel zur Verfügung zu stellen. Es kann ferner eine Aufbereitung der Scout-Umgebungsdaten auf dem externen Server erfolgen.

Bei einer weiteren Ausgestaltung werden von dem externen Server Daten zu der Scout-Trajektorie und/oder Scout-Umgebungsdaten an das Folgefahrzeug übertragen. Damit können dem Folgefahrzeug die zum Abgleich der Trajektorien und Umgebungsdaten nötigen Daten zentral zur Verfügung gestellt werden.

Die Daten, durch welche die Soll-Trajektorie als automatisch fahrbar bewertet wird, können in diesem Fall von dem Server verwaltet werden und das Folgefahrzeug kann die Trajektorie mit größerem zeitlichen Abstand vom Scout-Fahrzeug befahren. Die Speicherung kann für längere oder kürzere Frist erfolgen, wobei insbesondere die Charakteristik verschiedener Scout-Umgebungsdaten berücksichtigt werden kann. Beispielsweise können Werbetafeln ihr Aussehen ändern und verlieren daher nach einer bestimmten Zeit an Aussagekraft, während etwa der Standort einer Werbetafel an sich längerfristig für die Umgebung der Trajektorie kennzeichnend sein kann.

Durch das Speichern insbesondere der vom Scout-Fahrzeug und vom Folgefahrzeug erfassten Umgebungsdaten auf dem Server können auch Umgebungsdaten mehrerer Fahrzeuge gespeichert und zusammengeführt werden, etwa zu verschiedenen Zeitpunkten. Dies erlaubt eine Aktualisierung der vom Server zur Verfügung gestellten Scout-Umgebungsdaten, etwa wenn sich das Aussehen der Bepflanzung am Rand einer Strecke ändert oder wenn neue Bauwerke entstehen. Es kann dabei ein Aktualisierungsverfahren vorgesehen sein, das automatisch kleinere Änderungen erkennt und eine entsprechende Aktualisierung vornimmt, während bei größeren Veränderungen die Scout-Umgebungsdaten der Trajektorie neu von einem manuell geführten Scout-Fahrzeug erfasst werden müssen und eine Neubewertung der automatischen Befahrbarkeit der Trajektorie vorgenommen werden muss.

Ferner können die Scout-Umgebungsdaten für eine längere Strecke, die nicht als ganze von einem Scout-Fahrzeug gefahren wurde, die Scout-Umgebungsdaten von mehreren Scout-Fahrzeugen kombiniert werden. Beispielsweise kann die längere Strecke in mehrere Teiltrajektorien unterteilt werden, zu denen jeweils Scout-Umgebungsdaten von verschiedenen Scout-Fahrzeugen vorliegen.

Bei einer Weiterbildung erfassen die Sensoren des Scout-Fahrzeugs und/oder die Sensoren des Folgefahrzeugs Bilddaten. Dadurch eignen sich die Sensordaten vorteilhafterweise zur Interpretation durch einen menschlichen Betrachter, etwa um die automatische Extraktion von Merkmalen zu überprüfen oder um die Eignung der Strecke zur automatischen Fahrt zu überprüfen.

Die Bilddaten können dabei nach an sich bekannten Verfahren erfasst werden, etwa durch die Detektion von Licht im sichtbaren Bereich oder durch Infrarotkameras. Ferner können Bilddaten anhand anderer Detektionsmethoden erzeugt oder mit weiteren Daten kombiniert werden, etwa durch Verwendung von Ultraschall, Radar oder Lidar.

In einer Ausbildung werden, falls der Trajektorienvergleich den bestimmten Wert nicht übersteigt, Folgefahrzeug-Umgebungsdaten an eine Entscheidungsstelle übertragen und Steuerungsdaten werden von der Entscheidungsstelle an das Folgefahrzeug übertragen. Dadurch kann vorteilhafterweise eine Entscheidungsstelle, insbesondere ein menschlicher Entscheider, die Funktion des Systems unterstützen.

Ist die erforderliche Ähnlichkeit der Scout- und Folgefahrzeug-Umgebungsdaten oder Trajektorien nicht gegeben, beispielsweise weil Veränderungen an Bauwerken in der Umgebung der Trajektorie vorgenommen wurden oder weil eine neue Geschwindigkeitsbeschränkung für die Trajektorie eingerichtet wurde, so wird die automatische Steuerung des Folgefahrzeugs nicht automatisch freigegeben. Ferner können bei der Erfassung der Umgebungsdaten durch Sensoren und Einrichtungen des Scout-Fahrzeugs und des Folgefahrzeugs Unterschiede auftreten, etwa wenn eines der Systeme ein Verkehrsschild falsch interpretiert oder wenn Merkmale der Bepflanzung am Rand der Trajektorie unterschiedlich interpretiert werden. Dies kann etwa durch veränderte Sichtverhältnisse oder Wetterbedingungen begünstigt werden.

Die Entscheidung über die automatische Befahrbarkeit der Trajektorie kann in diesem Fall einer Entscheidungsstelle übergeben werden und es können zu diesem Zweck Folgefahrzeug-Umgebungsdaten an die Entscheidungsstelle übertragen werden. Als Entscheidungsstelle fungiert hier eine Instanz, die eine Entscheidung über die automatische Befahrbarkeit treffen und/oder weitere Signale zur Steuerung des Folgefahrzeugs an dieses übertragen kann. Dies kann beispielsweise ein Fahrer des Folgefahrzeugs oder des Scout-Fahrzeugs sein, aber auch ein Nutzer in einer Einsatzzentrale, dem die erfassten Umgebungsdaten angezeigt werden und der die automatische Steuerung des Fahrzeugs aktiviert oder eine manuelle Steuerung (ggf. Fernsteuerung) des Folgefahrzeugs aktiviert.

Bei einer weiteren Ausbildung betreffen die Scout-Umgebungsdaten und/oder die Folgefahrzeug-Umgebungsdaten Verkehrsbauwerke und/oder Verkehrszeichen. Dadurch werden vorteilhafterweise für die Verkehrsregelung und Verkehrsinfrastruktur relevante Merkmale des Trajektorie erfasst.

Die Umgebungsdaten können dabei über die reine äußere Beschreibung der Merkmale der Umgebung der Trajektorie hinaus auch eine Interpretation umfassen. Beispielsweise kann anhand von Bilddaten von Verkehrszeichen bestimmt werden, ob eine Geschwindigkeitsbegrenzung, ein Überholverbot oder eine bestimmte Vorfahrtsregelung vorliegt. Selbst wenn sich die Beschilderung seit der Erfassung durch das Scout-Fahrzeug geändert hat, kann die Gültigkeit einer bestimmten Verkehrsregelung als wesentliches Merkmal erfasst werden. Die Abstraktion der Gehalt eines Verkehrszeichens von seiner äußeren Gestalt ermöglicht insbesondere die Berücksichtigung dynamischer Verkehrsleitsysteme, sodass etwa geänderte Zustände einer Ampelschaltung oder einer variablen Geschwindigkeitsbeschränkung nicht dazu führen, dass die Umgebungsdatenähnlichkeit den bestimmten Wert nicht erreicht und eine automatische Fahrt als unsicher bewertet wird.

Bei einer Weiterbildung werden für Abweichungen zwischen den Scout-Umgebungsdaten und den Folgefahrzeug-Umgebungsdaten Prioritäten bestimmt und die Umgebungsdatenähnlichkeit wird in Abhängigkeit von den Prioritäten erzeugt. Dadurch wird vorteilhafterweise sichergestellt, dass die Umgebungsdatenähnlichkeit anhand relevanter Merkmale der Trajektorie bestimmt wird.

Verschiedene Abweichungen können dabei unterschiedlich gewichtet werden. Beispielsweise kann eine Spurverlegung auf einer Fahrbahn höher gewichtet werden als eine (etwa durch Schnee) verdeckte Fahrbahnmarkierung oder ein Baum, der seit der Erfassung durch das Scout-Fahrzeug sein Aussehen verändert hat oder gefällt wurde. Die Unterscheidung von Merkmalen, die für die Sicherheit einer automatischen Steuerung des Folgefahrzeugs relevant sind und solchen, die weniger oder nur in Kombination miteinander relevant sind, erlaubt dabei einen gegenüber kleinen Veränderungen robusten Betrieb des Systems.

Werden die Scout- und Folgefahrzeug-Umgebungsdaten auf einen externen Server übertragen und dort gespeichert, so kann eine Aktualisierung der Umgebungsdaten auch anhand der Prioritäten erfolgen. Beispielsweise können Merkmale mit geringer Priorität, etwa ein Veränderung der Bepflanzung am Rand einer Strecke, anhand aktueller Daten verändert werden, während bei relevanteren Änderungen, etwa Verlegung einer Fahrspur, eine automatische Fahrt erst wieder sicher aktiviert werden kann, wenn die Scout-Umgebungsdaten neu erfasst wurden.

Bei einer Ausbildung werden ferner Scout-Fahrzeugdaten über Eigenschaften des Scout-Fahrzeugs an das Folgefahrzeug überragen und die automatische Steuerung des Folgefahrzeugs wird ferner in Abhängigkeit von den Scout-Fahrzeugdaten aktiviert. Damit kann in vorteilhafter Weise beurteilt werden, ob die von dem Scout-Fahrzeug erfassten Scout-Umgebungsdaten für das Folgefahrzeug relevant sind.

Beispielsweise kann eine Höhenbeschränkung, die für ein Scout-Fahrzeug relevant ist, für ein Folgefahrzeug eines anderen Typs nicht relevant sein. Zudem können etwa unterschiedliche Verkehrsregelungen wie Geschwindigkeitsbeschränkungen oder Überholverbote nur für bestimmte Fahrzeugtypen gelten.

Bei dem erfindungsgemäßen System zur automatischen Steuerung zumindest eines Folgefahrzeugs umfasst ein Scout-Fahrzeug einen Scout-Fahrplaner, durch den eine Scout-Trajektorie für das Scout-Fahrzeug erzeugbar ist, eine Scout-Steuereinrichtung, durch die das Scout- Fahrzeug entlang einer Ist-Trajektorie führbar ist, und Sensoren, durch welche die Ist-Trajektorie und Scout-Umgebungsdaten erfassbar sind. Das Folgefahrzeug umfasst dabei einen Folgefahrzeug-Fahrplaner, durch den eine Soll-Trajektorie für das Folgefahrzeug erzeugbar ist, Sensoren, durch die Folgefahrzeug-Umgebungsdaten erfassbar sind, und eine Folgefahrzeug-Steuereinrichtung, durch die das Folgefahrzeug entlang der Soll-Trajektorie steuerbar ist. Dabei ist anhand der erfassten Ist-Trajektorie und der erzeugten Soll-Trajektorie jeweils zumindest eine Trajektorienähnlichkeit zu der erzeugten Scout-Trajektorie bestimmbar. Die Scout-Trajektorie und Scout-Umgebungsdaten sind an das Folgefahrzeug übertragbar und anhand der Folgefahrzeug-Umgebungsdaten und der Scout-Umgebungsdaten ist eine Umgebungsdatenähnlichkeit bestimmbar. In Abhängigkeit von der Umgebungsdatenähnlichkeit ist schließlich eine automatische Steuerung des Folgefahrzeugs entlang der Soll-Trajektorie aktivierbar.

Das erfindungsgemäße System ist insbesondere ausgebildet, das vorstehend beschriebene Verfahren zu implementieren. Das System weist somit dieselben Vorteile auf wie das erfindungsgemäße Verfahren.

Bei einer Weiterbildung sind ferner Folgefahrzeug-Umgebungsdaten an das Scout-Fahrzeug übertragbar und Steuerungsdaten von dem Scout-Fahrzeug an das Folgefahrzeug übertragbar. Dadurch können dem Fahrer des Scout-Fahrzeugs vorteilhafterweise Folgefahrzeug-Umgebungsdaten ausgegeben werden und er kann in die Steuerung des Folgefahrzeugs eingreifen.

Ein solcher Eingriff kann insbesondere dann erfolgen, wenn eine sichere automatische Fahrt des Folgefahrzeugs nicht möglich ist. Der Eingriff kann aber auch im Aktivieren der automatischen des Folgefahrzeugs bestehen, etwa wenn der Fahrer des Scout-Fahrzeugs die befahrene Trajektorie als sicher befahrbar einschätzt.

Bei einer weiteren Ausbildung umfasst das System ferner einen externer Server, der zumindest zeitweise datentechnisch mit dem Scout-Fahrzeug und/oder dem Folgefahrzeug verbunden ist. Durch den externen Server sind Daten zu der Scout-Trajektorie und/oder Scout-Umgebungsdaten und/oder Folgefahrzeug-Umgebungsdaten speicherbar. Dadurch kann vorteilhafterweise der Austausch von Daten unabhängig von einer direkten Verbindung zwischen Scout-Fahrzeug und Folgefahrzeug erfolgen.

Bei einer Ausgestaltung werden die Scout-Trajektorie und die Soll-Trajektorie durch den Scout-Fahrplaner und den Folgefahrzeug-Fahrplaner so erzeugt, dass sie im Wesentlichen identisch sind. Dies erhöht in vorteilhafter Weise die Vergleichbarkeit der von den Fahrplanern bestimmten Trajektorien.

Die Erfindung wird nun anhand von Ausführungsbeispielen mit Bezug zu den Zeichnungen erläutert.
- Figur 1: zeigt ein Ausführungsbeispiel des erfindungsgemäßen Systems,
- Figur 2: zeigt ein Ausführungsbeispiel des erfindungsgemäßen Verfahrens und
- Figuren 3A und 3B: zeigen ein weiteres Ausführungsbeispiel des erfindungsgemäßen Verfahrens.

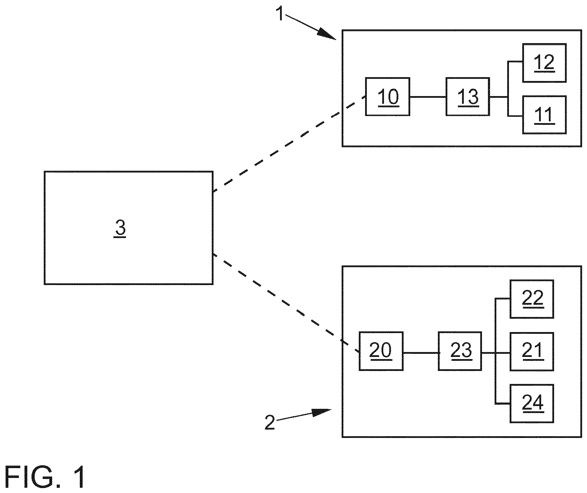

Mit Bezug zu Figur 1 wird ein Ausführungsbeispiel des erfindungsgemäßen Systems erläutert.

Das System umfasst ein Scout-Fahrzeug 1, ein Folgefahrzeug 2 und einen externen Server 3. Das Scout-Fahrzeug 1 und das Folgefahrzeug 2 sind wenigstens zeitweise datentechnisch mit dem externen Server 3 verbunden. Dazu umfasst das System Datenschnittstellen 10 und 20 des Scout-Fahrzeugs 1 und des Folgefahrzeugs 2. Auf diese Weise können Daten von den Fahrzeugen an den externen Server 3 übertragen, dort gespeichert und vom externen Server 3 an die Fahrzeuge übertragen werden. Insbesondere ermöglicht dies einen indirekten Austausch von Daten zwischen dem Scout-Fahrzeug 1 und dem Folgefahrzeug 2, ohne dass eine direkte Verbindung zwischen beiden bestehen muss.

Die datentechnische Verbindung kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Die Verbindung kann auch indirekt über eine weitere Einheit hergestellt werden, die selbst eine Verbindung zu dem externen Server herstellen kann. Beispielsweise kann eine datentechnische Verbindung zwischen der mobilen Einheit und einem mit dem Internet verbundenen Mobiltelefon bestehen, etwa durch ein Datenkabel oder eine Funkverbindung, etwa per Bluetooth. Insbesondere kann die Verbindung zu dem externen Server 3 über das Internet hergestellt werden.

In einem weiteren Ausführungsbeispiel sind das Scout-Fahrzeug 1 und das Folgefahrzeug 2 alternativ oder zusätzlich zu dem externen Server 3 miteinander verbunden. In diesem Fall umfasst das System nicht notwendigerweise den externen Server 3. Der Datenaustausch kann in diesem Fall direkt zwischen Fahrzeugen erfolgen.

Das Scout-Fahrzeug 1 umfasst eine Steuereinheit 13, mit der die Datenschnittstelle 10, ein Fahrplaner 12 und eine Erfassungseinheit 11 gekoppelt sind. Durch den Fahrplaner 12 des Scout-Fahrzeugs 1 wird eine Scout-Trajektorie erzeug. Ferner werden durch die Erfassungseinheit 11 Scout-Umgebungsdaten und die von dem Scout-Fahrzeug 1 befahrene Ist-Trajektorie erfasst.

Die Ist-Trajektorie wird dabei nach an sich bekannten Verfahren bestimmt, insbesondere anhand der Daten eines satellitengestützten Ortungssystems. Ferner erfassen andere Sensoren der Erfassungseinheit 11 Bilddaten in der Umgebung des Scout-Fahrzeugs 1, wobei zusätzlich zu Sensoren für den sichtbaren Teil des Lichtspektrums auch Infrarotkameras verwendet werden. Ferner werden Radar- und Lidar-Sensoren verwendet. Die Umgebungsdaten umfassen charakteristische Merkmale in der Umgebung der befahrenen Trajektorie etwa Merkmale des befahrenen Untergrunds, zum Beispiel den Streckenverlauf, Fahrbahnmarkierungen oder den Zustand des Bodenbelags, Hinweisschilder, Bauwerke, Pflanzen und landschaftliche Merkmale in der Umgebung der Strecke.

Analog zum Scout-Fahrzeug 1 umfasst auch das Folgefahrzeug 2 eine Steuereinheit 23, die mit der Datenschnittstelle 20, einem Fahrplaner 22 und einer Erfassungseinheit 21 gekoppelt ist. Es umfasst ferner einen Autopilot 24, der das Fahrzeug automatisch steuern kann. Durch die Erfassungseinheit 21 werden Folgefahrzeug-Umgebungsdaten erfasst.

Die automatische Steuerung durch den Autopiloten 24 erfolgt nach an sich bekannten Verfahren, insbesondere durch automatische Eingriffe der Längs- und Querbeschleunigung des Folgefahrzeugs 2. Auf diese Weise können Richtung und Betrag der Fahrzeuggeschwindigkeit gesteuert werden. Der Autopilot geht dabei von einer durch den Fahrplaner 22 des Folgefahrzeugs 2 bestimmten Soll-Trajektorie aus, allerdings kann sich die tatsächlich vom Folgefahrzeug 2 gefahrene Trajektorie von der Soll-Trajektorie unterscheiden, etwa wenn Hindernissen ausgeglichen werden muss oder der Verkehrsfluss ein Abweichen von der geplanten Trajektorie erfordert. Die automatische Steuerung durch den Autopiloten 24 setzt voraus, dass die automatische Steuerung durch die Steuereinheit 23 aktiviert wurde.

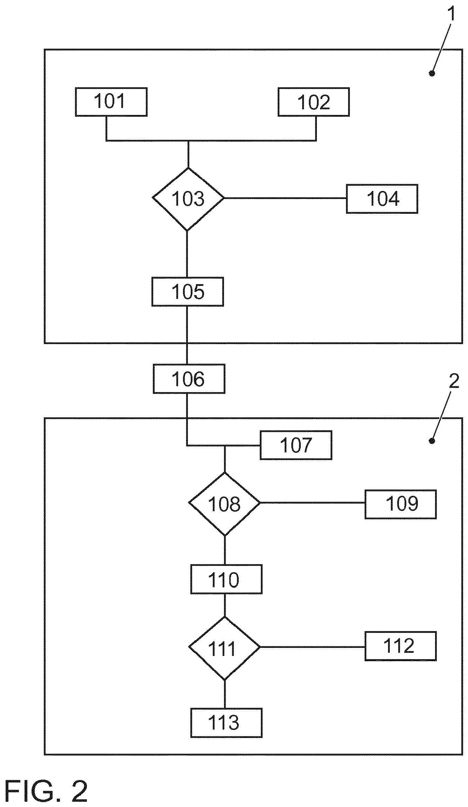

Mit Bezug zu den Figuren 1 und 2 wird ein Ausführungsbeispiel des erfindungsgemäßen Verfahrens erläutert.

Das erfindungsgemäße Verfahren wird in diesem Beispiel durch das in Figur 1 dargestellte System implementiert. Die Darstellung der Schritte, durch die das erfindungsgemäße Verfahren ausgeführt wird, spiegelt nicht notwendigerweise die Reihenfolge der Durchführung einzelner Schritte wider. Diese können ferner mit größerem oder kleinerem zeitlichen Abstand oder gleichzeitig ausgeführt werden.

Das Scout-Fahrzeug 1 wird auf einer Ist-Trajektorie geführt. Im dargestellten Fall wird es dabei von einem Fahrer gesteuert, der manuell die Lenkung und die Geschwindigkeit des Fahrzeugs steuert. Im Scout-Fahrzeug 1 wird durch den Fahrplaner 12 in einem Schritt 101 eine Scout-Trajektorie bestimmt, in einem Schritt 102 wird ferner durch die Erfassungseinheit 11 die Ist-Trajektorie erfasst.

In einem Schritt 103 werden Scout- und Ist-Trajektorie miteinander verglichen. Dabei wird eine Trajektorienähnlichkeit bestimmt. Wird dabei ein bestimmter Schwellenwert unterschritten, so wird in einem Schritt 104 die automatisch geplante Trajektorie als nicht sicher automatisch befahrbar bewertet, da der Fahrer das Scout-Fahrzeug 1 nicht die automatisch erzeugte Scout-Trajektorie gewählt hat. Wird der Schwellenwert dagegen erreicht oder überschritten, so wird die automatisch erzeugte Trajektorie als automatisch befahrbar bewertet, da der automatische Fahrplaner 12 und der Fahrer des Scout-Fahrzeugs 1 die gleiche Trajektorie gewählt haben.

In einem Schritt 105 werden Scout-Umgebungsdaten erfasst. Die Erfassung der Scout-Umgebungsdaten kann fortlaufend erfolgen, unabhängig von der in Schritt 103 bestimmten Trajektorienähnlichkeit zwischen Scout- und Ist-Trajektorie.

In einem Schritt 106 werden die Scout-Trajektorie und Scout-Umgebungsdaten an das Folgefahrzeug 2 übertragen. Dabei werden insbesondere nur relevante Daten übertragen, etwa solche Scout-Umgebungsdaten, die als besonders kennzeichnend für den Verlauf der Scout-Trajektorie bestimmt wurden, oder diejenigen Teile der Scout-Trajektorie, die als für das Folgefahrzeug 2 relevant erkannt wurden. Dabei kann insbesondere eine bidirektionale Verbindung zwischen Scout-Fahrzeug 1 und Folgefahrzeug 2 zum Austausch von Informationen über die zu übertragenden Daten verwendet werden.

Die Übertragung erfolgt hier wie in Figur 1 gezeigt indirekt über den externen Server 3. In einem weiteren Ausführungsbeispiel besteht eine direkte Verbindung zwischen dem Scout-Fahrzeug 1 und dem Folgefahrzeug 2.

In einem Schritt 107 wird von dem Fahrplaner 21 des Folgefahrzeugs 2 eine Soll-Trajektorie für das Folgefahrzeug 2 erzeugt. In einem weiteren Schritt 108 werden die Soll-Trajektorie und die Scout-Trajektorie verglichen und es wird eine Trajektorienähnlichkeit bestimmt. Analog zu dem Vergleich von Ist- und Scout-Trajektorie in Schritt 103 wird bestimmt, ob die für das Folgefahrzeug 2 geplante Soll-Trajektorie der Scout-Trajektorie im Wesentlichen entspricht. Zusammen mit der Ähnlichkeit zwischen der Scout-Trajektorie und der vom Scout-Fahrzeug 1 befahrenen Ist-Trajektorie wird daraus die Information abgeleitet, ob sich das Folgefahrzeug 2 im Wesentlichen auf der gleichen Trajektorie befindet wie zuvor das Scout-Fahrzeug 1.

Ist dies nicht der Fall, so bricht das Verfahren in einem Schritt 109 ab, da sich das Scout-Fahrzeug 1 und das Folgefahrzeug 2 auf unterschiedlichen Trajektorien befinden. Wird dagegen ein bestimmter Schwellenwert der Trajektorienähnlichkeit erreicht, so werden in einem Schritt 110 Folgefahrzeug-Umgebungsdaten erfasst. Dies erfolgt analog zur Erfassung der Scout-Umgebungsdaten durch das Scout-Fahrzeug 1 in Schritt 105.

In einem Schritt 111 werden die Scout-Umgebungsdaten, die in Schritt 106 an das Folgefahrzeug 2 übertragen worden sind, mit den erfassten Folgefahrzeug-Umgebungsdaten verglichen. Für die Umgebungsdaten-Ähnlichkeit ist ein Schwellenwert bestimmt, bei dessen Unterschreiten in einem Schritt 112 die Soll-Trajektorie als nicht sicher automatisch befahrbar bewertet wird. Dies bedeutet insbesondere, dass sich für die Soll-Trajektorie charakteristische Merkmale von Merkmalen der Scout-Trajektorie unterscheiden, dass sich also seit dem Befahren der Strecke durch das Scout-Fahrzeug 1 Änderungen ergeben haben. Es wird daher davon ausgegangen, dass sich auch Merkmale der Trajektorie, die für die Sicherheit einer automatischen Fahrt relevant sind, verändert haben und die Bewertung der Trajektorie durch das Scout-Fahrzeug 1 veraltet ist.

Insbesondere wird dabei ein sicherer Fahrmodus des Folgefahrzeugs 2 aktiviert, in dem alternativ oder zusätzlich zu dem Autopiloten 24 ein Fahrer die Führung des Folgefahrzeugs 2 überwacht oder aktiv eingreift. Im dargestellten Fall wird dies durch einen Fahrer im Folgefahrzeug 2 ausgeführt, in anderen Ausführungsbeispielen kann sich der Fahrer beispielsweise im Scout-Fahrzeug 1 befinden oder von einer Einsatzzentrale aus über den externen Server 3 Steuersignale an das Folgefahrzeug 2 übertragen.

Erreicht die Umgebungsdaten-Ähnlichkeit jedoch einen bestimmten Schwellenwert, so wird in einem Schritt 113 die automatische Steuerung des Folgefahrzeugs 2 entlang der Soll-Trajektorie aktiviert. In diesem Fall übernimmt der Autopilot 24 des Folgefahrzeugs 2 die Steuerung des Folgefahrzeugs 2 in Längs- und Querrichtung. Insbesondere erfolgt dies anhand von Daten, die durch die Erfassungseinheit 21 erfasst werden, etwa Informationen über Positionen und die Bewegung andere Verkehrsteilnehmer, den Fahrbahnverlauf, Hindernisse auf der Fahrbahn und verkehrsrechtliche Einschränkungen wie Geschwindigkeitsbeschränkungen oder Überholverbote.

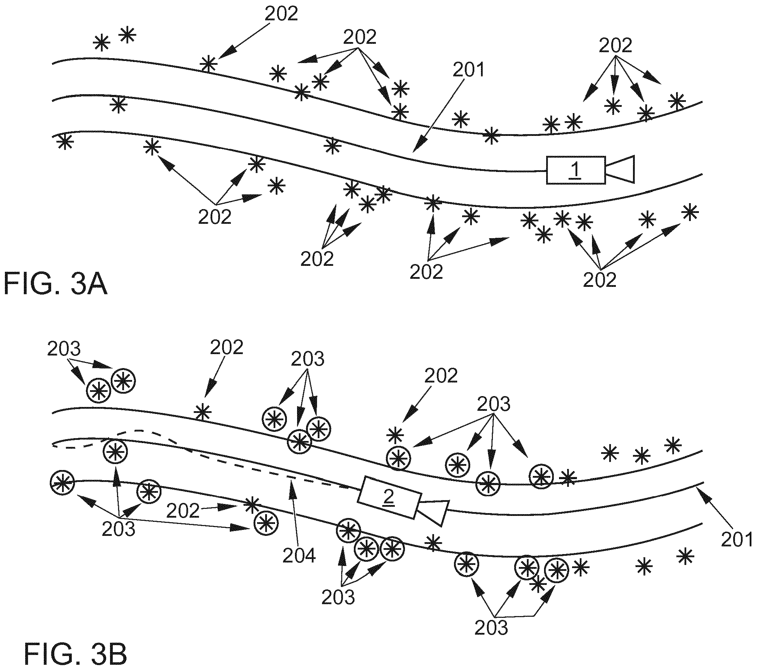

Anhand der Figuren 3A und 3B wird ein weiteres Ausführungsbeispiel des erfindungsgemäßen Verfahrens erläutert. Das erfindungsgemäße Verfahren wird in diesem Beispiel durch das in Figur 1 dargestellte System implementiert.

Zunächst befährt das Scout-Fahrzeug 1 eine Strecke entlang der Ist-Trajektorie 201. Währenddessen erfassen die Sensoren der Erfassungseinheit 11 des Scout-Fahrzeugs 1 Scout-Umgebungsdaten, die Scout-Orientierungspunkte umfassen. Im dargestellten Fall sind dies Verkehrszeichen auf der Fahrbahn und am Streckenrand sowie Bauwerke und landschaftliche Besonderheiten, etwa einzelne Bäume, in der Umgebung der Ist-Trajektorie 201.

Zugleich wird die Ist-Trajektorie 201 mit einer durch den Fahrplaner 12 des Scout-Fahrzeugs 1 bestimmten Scout-Trajektorie (nicht dargestellt) verglichen und eine hohe TrajektorienÄhnlichkeit festgestellt. Das heißt, der Fahrer, der im dargestellten Beispiel das Scout-Fahrzeug 1 führt, wählt im Wesentlichen die gleiche Trajektorie wie der Fahrplaner 12 dies automatisch tun würde. Daher wird die automatisch generierte Scout-Trajektorie als sicher befahrbar bewertet.

Zu einem späteren Zeitpunkt befährt das Folgefahrzeug 2 die gleiche Strecke. Es wird durch den Fahrplaner 22 des Folgefahrzeugs 2 eine Soll-Trajektorie 204 erzeugt und. Die Ist-Trajektorie wird an das Folgefahrzeug übertragen und mit der Soll-Trajektorie 204 verglichen. Im dargestellten Fall ist die Trajektorienähnlichkeit groß genug, um von im Wesentlichen gleichen Trajektorien auszugehen.

Ferner werden die Scout-Umgebungsdaten an das Folgefahrzeug 2 übertragen. Das Folgefahrzeug 2 erfasst zugleich eigene Folgefahrzeug-Umgebungsdaten und vergleicht diese mit den Scout-Umgebungsdaten. Dabei stimmen einige der Scout-Orientierungspunkte 202 mit durch das Folgefahrzeug 2 erfassten Folgefahrzeug-Orientierungspunkten 203 überein. Beispielsweise werden Bäume oder Verkehrsschilder an der gleichen Position erfasst.

In einem Vergleich wird eine Umgebungsdaten-Ähnlichkeit bestimmt, die im dargestellten Fall einen zuvor bestimmten Schwellenwert übersteigt. Daher wird für das Folgefahrzeug 2 die automatische Steuerung anhand des Autopiloten 24 entlang der Soll-Trajektorie 204 aktiviert.

Bei dem Vergleich wird eine Priorisierung der verschiedenen Merkmale vorgenommen. Beispielsweise hat es weniger gravierende Folgen für die Umgebungsdaten-Ähnlichkeit, wenn ein Teil der Bepflanzung am Rand der Strecke sich geändert hat, als wenn der Verlauf einer Fahrspur geändert wurde. Ferner werden Fahrzeugdaten des Scout-Fahrzeugs 1 berücksichtigt, etwa seine Höhe, die mit der Höhe des Folgefahrzeugs 2 nicht identisch sein muss.

In einem weiteren Ausführungsbeispiel werden von dem externen Server 3 Scout-Trajektorien und zugeordnete Scout-Umgebungsdaten gespeichert und an ein Folgefahrzeug 2 übertragen. Durch diese zentrale Speicherung können die Scout-Umgebungsdaten erweitert und/oder aktualisiert werden, beispielsweise anhand der von dem Folgefahrzeug 2 erfassten Folgefahrzeug-Umgebungsdaten: Wird hierbei etwa erfasst, dass einer der Scout-Orientierungspunkte 202 nicht mehr vorhanden ist, beispielsweise weil ein parkendes Fahrzeug am Streckenrand fortbewegt wurde, so kann der auf dem externen Server 3 gespeicherte Datensatz entsprechend angepasst werden. Ein Filteralgorithmus bestimmt dabei, ob die Änderungen geringfügig sind und daher eine Anpassung erfolgen kann oder ob sie die automatische Befahrbarkeit der Scout-Trajektorie 201 infrage stellen, was eine neue Erfassung von Scout-Umgebungsdaten entlang der Scout-Trajektorie 201 durch ein manuell geführtes Scout-Fahrzeug 1 nötig macht.

In einem weiteren Ausführungsbeispiel wird durch das Folgefahrzeug 2 einer der Folgefahrzeug-Orientierungspunkte 203 nicht mit ausreichender Qualität erfasst, beispielsweise kann ein Verkehrsschild bei schlechten Sichtverhältnissen nicht mit ausreichender Sicherheit automatisch gelesen werden. Es werden nun Folgefahrzeug-Umgebungsdaten, in diesem Beispiel Bilddaten des Verkehrsschildes, an das Scout-Fahrzeug 1 übertragen, dessen Fahrer als Entscheidungsstelle fungiert. Er kann nun entscheiden, ob die automatische Fahrt sicher fortgesetzt werden kann und kann etwa Steuerungssignale an das Folgefahrzeug 2 übertragen, die den Inhalt des Verkehrsschildes wiedergeben. Die Entscheidungsstelle kann ferner über den externen Server 3 in das System eingebunden sein.

### Bezugszeichenliste

- 1: Scout-Fahrzeug
- 2: Folgefahrzeug
- 3: Externer Server
- 10: Datenschnittstelle (Scout-Fahrzeug)
- 11: Erfassungseinheit, Sensoren (Scout-Fahrzeug)
- 12: Fahrplaner (Scout-Fahrzeug)
- 13: Steuereinheit (Scout-Fahrzeug)
- 20: Datenschnittstelle (Folgefahrzeug)
- 21: Erfassungseinheit, Sensoren (Folgefahrzeug)
- 22: Fahrplaner (Folgefahrzeug)
- 23: Steuereinheit (Folgefahrzeug)
- 24: Autopilot (Folgefahrzeug)
- 101: Erzeugung von Scout-Trajektorie
- 102: Erfassen von Ist-Trajektorie
- 103: Vergleich von Scout- und Ist-Trajektorie
- 104: Bewertung der Scout-Trajektorie als nicht automatisiert fahrbar
- 105: Erfassung von Scout-Umgebungsdaten
- 106: Übertragung von Scout-Umgebungsdaten und Scout-Trajektorie
- 107: Erzeugung von Soll-Trajektorie
- 108: Vergleich von Scout- und Soll-Trajektorie
- 109: Abbruch
- 110: Erfassung von Folgefahrzeug-Umgebungsdaten
- 111: Vergleich von Scout- und Folgefahrzeug-Umgebungsdaten
- 112: Bewertung der Soll-Trajektorie als nicht automatisiert fahrbar
- 113: Aktivieren der automatischen Steuerung
- 201: Ist-Trajektorie des Scout-Fahrzeugs
- 202: Scout-Orientierungspunkte, Scout-Umgebungsdaten
- 203: Folgefahrzeug-Orientierungspunkte, Folgefahrzeug-Umgebungsdaten
- 204: Soll-Trajektorie des Folgefahrzeugs

## Patentansprüche

1. Verfahren zur automatischen Steuerung zumindest eines Folgefahrzeugs (2), bei dem für ein Scout-Fahrzeug (1) eine Scout-Trajektorie erzeugt wird,
das Scout- Fahrzeug (1) entlang einer Ist-Trajektorie (201) geführt wird, wobei mittels Sensoren (11) des Scout-Fahrzeugs (1) die Ist-Trajektorie (201) des Scout-Fahrzeugs (1) und Scout-Umgebungsdaten (202) erfasst werden,
für das Folgefahrzeug (2) eine Soll-Trajektorie erzeugt wird und mittels Sensoren (21) des Folgefahrzeugs (2) Folgefahrzeug-Umgebungsdaten (203) erfasst werden und die Scout-Trajektorie und Scout-Umgebungsdaten (202) an das Folgefahrzeug (2) übertragen werden und,
wenn die erfasste Ist-Trajektorie (201) und die erzeugte Soll-Trajektorie (204) jeweils zumindest eine bestimmte Trajektorienähnlichkeit zu der erzeugten Scout-Trajektorie aufweisen und
wenn die Folgefahrzeug-Umgebungsdaten (203) zumindest eine bestimmte Umgebungsdatenähnlichkeit zu den Scout-Umgebungsdaten (202) aufweisen, eine automatische Steuerung des Folgefahrzeugs (1) entlang der Soll-Trajektorie (204) aktiviert wird.

2. Verfahren nach einem der vorhergehenden Ansprüchen,
**dadurch gekennzeichnet, dass**
das Scout-Fahrzeug (1) manuell von einem Scout-Fahrer geführt wird.

3. Verfahren nach einem der vorhergehenden Ansprüche,
**dadurch gekennzeichnet, dass**
falls die Umgebungsdatenähnlichkeit den bestimmten Wert der bestimmten Umgebungsdatenähnlichkeit nicht übersteigt, ein sicherer Fahrmodus des Folgefahrzeugs (2) aktiviert wird.

4. Verfahren nach einem der vorhergehenden Ansprüche,
**dadurch gekennzeichnet, dass**
die automatische Steuerung des Folgefahrzeugs (2) eine Steuerung der Bewegung des Folgefahrzeugs (2) in Längs- und Querrichtung umfasst.

5. Verfahren nach einem der vorhergehenden Ansprüche,
**dadurch gekennzeichnet, dass**
Daten zu der Scout-Trajektorie und/oder Daten zu der Soll-Trajektorie (204) und/oder Scout-Umgebungsdaten (202) und/oder Folgefahrzeug-Umgebungsdaten (203) an einen externen Server (3) übertragen werden und von dem Server (3) gespeichert werden.

6. Verfahren nach Anspruch 5,
**dadurch gekennzeichnet, dass**
von dem externen Server (3) Daten zu der Scout-Trajektorie und/oder Scout-Umgebungsdaten (202) an das Folgefahrzeug (2) übertragen werden.

7. Verfahren nach einem der vorhergehenden Ansprüche,
**dadurch gekennzeichnet, dass**
die Sensoren (11) des Scout-Fahrzeugs (1) und/oder die Sensoren (21) des Folgefahrzeugs (2) Bilddaten erfassen.

8. Verfahren nach einem der vorhergehenden Ansprüche,
**dadurch gekennzeichnet, dass,**
falls die Umgebungsdatenähnlichkeit den bestimmten Wert der bestimmten Umgebungsdatenähnlichkeit nicht übersteigt, Folgefahrzeug-Umgebungsdaten (203) an eine Entscheidungsstelle übertragen werden und
Steuerungsdaten von der Entscheidungsstelle an das Folgefahrzeug (2) übertragen werden.

9. Verfahren nach einem der vorhergehenden Ansprüche,
**dadurch gekennzeichnet, dass**
die Scout-Umgebungsdaten (202) und/oder die Folgefahrzeug-Umgebungsdaten (203) Verkehrsbauwerke und/oder Verkehrszeichen betreffen.

10. Verfahren nach einem der vorhergehenden Ansprüche,
**dadurch gekennzeichnet, dass**
für Abweichungen zwischen den Scout-Umgebungsdaten (202) und den Folgefahrzeug-Umgebungsdaten (203) Prioritäten bestimmt werden und
die Umgebungsdatenähnlichkeit in Abhängigkeit von den Prioritäten erzeugt wird.

11. Verfahren nach einem der vorhergehenden Ansprüche,
**dadurch gekennzeichnet, dass**
ferner Scout-Fahrzeugdaten über Eigenschaften des Scout-Fahrzeugs (1) an das Folgefahrzeug (2) übertragen werden und
die automatische Steuerung des Folgefahrzeugs (2) ferner in Abhängigkeit von den Scout-Fahrzeugdaten aktiviert wird.

12. System zur automatischen Steuerung zumindest eines Folgefahrzeugs (2) mit einem Scout-Fahrzeug (1),
wobei das Scout-Fahrzeug (1) umfasst:
- einen Scout-Fahrplaner (12), durch den eine Scout-Trajektorie für das Scout-Fahrzeug (1) erzeugbar ist,
- eine Scout-Steuereinrichtung (13), durch die das Scout-Fahrzeug (1) entlang einer Ist-Trajektorie (201) führbar ist, und
- Sensoren (11), durch welche die Ist-Trajektorie (201) und Scout-Umgebungsdaten (202) erfassbar sind;
wobei das Folgefahrzeug (2) umfasst:
- einen Folgefahrzeug-Fahrplaner (22), durch den eine Soll-Trajektorie (204) für das Folgefahrzeug (2) erzeugbar ist,
- Sensoren (21), durch die Folgefahrzeug-Umgebungsdaten (203) erfassbar sind, und
- eine Folgefahrzeug-Steuereinrichtung (23), durch die das Folgefahrzeug (2) entlang der Soll-Trajektorie (204) steuerbar ist;
wobei
- anhand der erfassten Ist-Trajektorie (201) und der erzeugten Soll-Trajektorie (204) jeweils zumindest eine Trajektorienähnlichkeit zu der erzeugten Scout-Trajektorie bestimmbar ist,
- die Scout-Trajektorie und Scout-Umgebungsdaten (202) an das Folgefahrzeug (1) übertragbar sind,
- anhand der Folgefahrzeug-Umgebungsdaten (203) und der Scout-Umgebungsdaten (202) eine Umgebungsdatenähnlichkeit bestimmbar ist und
- in Abhängigkeit von der Umgebungsdatenähnlichkeit eine automatische Steuerung des Folgefahrzeugs (2) entlang der Soll-Trajektorie (204) aktivierbar ist.

13. System nach Anspruch 12,
**dadurch gekennzeichnet, dass**
ferner Folgefahrzeug-Umgebungsdaten (204) an das Scout-Fahrzeug (1) übertragbar sind und Steuerungsdaten von dem Scout-Fahrzeug (1) an das Folgefahrzeug (2) übertragbar sind.

14. System nach einem der Ansprüche 12 und 13,
**dadurch gekennzeichnet, dass**
ferner ein externer Server (3) umfasst ist, der zumindest zeitweise datentechnisch mit dem Scout-Fahrzeug (1) und/oder dem Folgefahrzeug (2) verbunden ist, durch den Daten zu der Scout-Trajektorie und/oder Scout-Umgebungsdaten (202) und/oder Folgefahrzeug-Umgebungsdaten (203) speicherbar sind.

15. System nach einem der Ansprüche 12 bis 14,
**dadurch gekennzeichnet, dass**
die Scout-Trajektorie und die Soll-Trajektorie (204) durch den Scout-Fahrplaner (12) und den Folgefahrzeug-Fahrplaner (22) so erzeugt werden, dass sie im Wesentlichen identisch sind.

## Claims

1. Method for automatically controlling at least one following vehicle (2), in which a scout trajectory is generated for a scout vehicle (1),
the scout vehicle (1) is guided along an actual trajectory (201), wherein the actual trajectory (201) of the scout vehicle (1) and scout environmental data (202) are detected by means of sensors (11) of the scout vehicle (1),
a target trajectory is generated for the following vehicle (2) and, by means of sensors (21) of the following vehicle (2), following vehicle environmental data (203) are detected, and the scout trajectory and scout environmental data (202) are transmitted to the following vehicle (2), and
if the detected actual trajectory (201) and the generated target trajectory (204) each have at least one particular trajectory similarity to the generated scout trajectory, and
if the following vehicle environmental data (203) have at least one particular environmental data similarity to the scout environmental data (202), automatic control of the following vehicle (1) is activated along the target trajectory (204).

2. Method according to any one of the preceding claims,
**characterized in that**
the scout vehicle (1) is manually guided by a scout driver.

3. Method according to any one of the preceding claims,
**characterized in that**
if the environmental data similarity does not exceed the particular value of the particular environmental data similarity, a safe driving mode of the following vehicle (2) is activated.

4. Method according to any one of the preceding claims,
**characterized in that**
the automatic control of the following vehicle (2) comprises a control of the movement of the following vehicle (2) in the longitudinal and transverse directions.

5. Method according to any one of the preceding claims,
**characterized in that**
data relating to the scout trajectory, and/or data relating to the target trajectory (204), and/or scout environmental data (202), and/or following vehicle environmental data (203) are transmitted to an external server (3) and are stored by the server (3).

6. Method according to claim 5,
**characterized in that**
data relating to the scout trajectory and/or scout environmental data (202) are transmitted from the external server (3) to the following vehicle (2).

7. Method according to any one of the preceding claims,
**characterized in that**
the sensors (11) of the scout vehicle (1) and/or the sensors (21) of the following vehicle (2) detect image data.

8. Method according to any one of the preceding claims,
**characterized in that**
if the environmental data similarity does not exceed the particular value of the particular environmental data similarity, following vehicle environmental data (203) are transmitted to a decision site, and
control data are transmitted from the decision site to the following vehicle (2).

9. Method according to any one of the preceding claims,
**characterized in that**
the scout environmental data (202) and/or the following vehicle environmental data (203) relate to traffic structures and/or traffic signs.

10. Method according to any one of the preceding claims,
**characterized in that**
priorities are determined for deviations between the scout environmental data (202) and the following vehicle environmental data (203), and
the environmental data similarity is generated depending on the priorities.

11. Method according to any one of the preceding claims,
**characterized in that**
furthermore, scout vehicle data about properties of the scout vehicle (1) are transmitted to the following vehicle (2), and
automatic control of the following vehicle (2) is furthermore activated depending on the scout vehicle data.

12. System for automatically controlling at least one following vehicle (2) with a scout vehicle (1),
wherein the scout vehicle (1) comprises:
- a scout route mapper (12) by means of which a scout trajectory for the scout vehicle (1) can be generated,
- a scout controller (13) by means of which the scout vehicle (1) can be guided along an actual trajectory (201), and
- sensors (11) by which the actual trajectory (201) and scout environmental data (202) can be detected;
wherein the following vehicle (2) comprises:
- a following vehicle route mapper (22) by means of which a target trajectory (204) for the following vehicle (2) can be generated,
- sensors (21) by means of which the following vehicle environmental data (203) can be detected, and
- a following vehicle controller (23) by means of which the following vehicle (2) can be controlled along the target trajectory (204);
wherein
- based on the detected actual trajectory (201) and the generated target trajectory (204), at least one trajectory similarity to the generated scout trajectory can be determined in each case,
- the scout trajectory and scout environmental data (202) can be transmitted to the following vehicle (1);
- based on the following vehicle environmental data (203) and scout environmental data (202), an environmental data similarity can be determined, and
- automatic control of the following vehicle (2) along the target trajectory (204) can be activated depending on the environmental data similarity.

13. System according to claim 12,
**characterized in that**
furthermore, following vehicle environmental data (204) can be transmitted to the scout vehicle (1), and control data can be transmitted from the scout vehicle (1) to the following vehicle (2).

14. System according to any one of claims 12 and 13,
**characterized in that**
furthermore, an external server (3) is comprised which is at least temporarily data-linked to the scout vehicle (1) and/or the following vehicle (2), by means of which server the data relating to the scout trajectory, and/or scout environmental data (202), and/or following vehicle environmental data (203) can be stored.

15. System according to any one of claims 12 through 14,
**characterized in that**
the scout trajectory and the target trajectory (204) are generated by the scout route mapper (12) and the following vehicle route mapper (22) such that they are substantially identical.

## Revendications

1. Procédé pour la commande automatique d'au moins un véhicule suiveur (2), dans lequel une trajectoire d'éclaireur est générée pour un véhicule éclaireur (1),
le véhicule éclaireur (1) est guidé le long d'une trajectoire réelle (201), la trajectoire réelle (201) du véhicule éclaireur (1) et des données d'environnement d'éclaireur (202) étant saisies au moyen de capteurs (11) du véhicule éclaireur (1),
une trajectoire de consigne est générée pour le véhicule suiveur (2) et des données d'environnement de véhicule suiveur (203) sont saisies au moyen de capteurs (21) du véhicule suiveur (2) et la trajectoire d'éclaireur et les données d'environnement d'éclaireur (202) sont transmises au véhicule suiveur (2) et,
si la trajectoire réelle (201) saisie et la trajectoire de consigne (204) générée présentent respectivement au moins une similitude de trajectoire déterminée avec la trajectoire d'éclaireur générée et
si les données d'environnement de véhicule suiveur (203) présentent au moins une similitude de données d'environnement déterminée avec les données d'environnement d'éclaireur (202), une commande automatique du véhicule suiveur (1) le long de la trajectoire de consigne (204) est activée.

2. Procédé selon l'une quelconque des revendications précédentes, **caractérisé en ce que**
le véhicule éclaireur (1) est guidé manuellement par un conducteur éclaireur.

3. Procédé selon l'une quelconque des revendications précédentes, **caractérisé en ce que**
si la similitude de données d'environnement ne dépasse pas la valeur déterminée de la similitude de données d'environnement déterminée, un mode de conduite sûr du véhicule suiveur (2) est activé.

4. Procédé selon l'une quelconque des revendications précédentes, **caractérisé en ce que**
la commande automatique du véhicule suiveur (2) comprend une commande du mouvement du véhicule suiveur (2) dans la direction longitudinale et transversale.

5. Procédé selon l'une quelconque des revendications précédentes, **caractérisé en ce que**
des données concernant la trajectoire d'éclaireur et/ou des données concernant la trajectoire de consigne (204) et/ou des données d'environnement d'éclaireur (202) et/ou des données d'environnement de véhicule suiveur (203) sont transmises à un serveur (3) externe et enregistrées par le serveur (3).

6. Procédé selon la revendication 5,
**caractérisé en ce que**
des données concernant la trajectoire d'éclaireur et/ou des données d'environnement d'éclaireur (202) sont transmises au véhicule suiveur (2) à partir du serveur (3) externe.

7. Procédé selon l'une quelconque des revendications précédentes, **caractérisé en ce que**
les capteurs (11) du véhicule éclaireur (1) et/ou les capteurs (21) du véhicule suiveur (2) saisissent des données d'image.

8. Procédé selon l'une quelconque des revendications précédentes, **caractérisé en ce que,**
si la similitude de données d'environnement ne dépasse pas la valeur déterminée de la similitude de données d'environnement déterminée, des données d'environnement de véhicule suiveur (203) sont transmises à un poste de décision et
des données de commande sont transmises au véhicule suiveur (2) à partir du poste de décision.

9. Procédé selon l'une quelconque des revendications précédentes, **caractérisé en ce que**
les données d'environnement d'éclaireur (202) et/ou les données d'environnement de véhicule suiveur (203) concernent des infrastructures de circulation et/ou des panneaux de signalisation.

10. Procédé selon l'une quelconque des revendications précédentes, **caractérisé en ce que**
des priorités sont déterminées pour des écarts entre les données d'environnement d'éclaireur (202) et les données d'environnement de véhicule suiveur (203) et
la similitude de données d'environnement est générée en fonction des priorités.

11. Procédé selon l'une quelconque des revendications précédentes, **caractérisé en ce que**
des données de véhicule éclaireur concernant des propriétés du véhicule éclaireur (1) sont en outre transmises au véhicule suiveur (2) et
la commande automatique du véhicule suiveur (2) est en outre activée en fonction des données de véhicule éclaireur.

12. Système pour la commande automatique d'au moins un véhicule suiveur (2) avec un véhicule éclaireur (1),
le véhicule éclaireur (1) comprenant :
- une feuille de route d'éclaireur (12), au moyen de laquelle une trajectoire d'éclaireur peut être générée pour le véhicule éclaireur (1),
- un dispositif de commande d'éclaireur (13), au moyen duquel le véhicule éclaireur (1) peut être guidé le long d'une trajectoire réelle (201) et
- des capteurs (11), au moyen desquels la trajectoire réelle (201) et des données d'environnement d'éclaireur (202) peuvent être saisies ;
le véhicule suiveur (2) comprenant :
- une feuille de route de véhicule suiveur (22), au moyen de laquelle une trajectoire de consigne (204) peut être générée pour le véhicule suiveur (2),
- des capteurs (21), au moyen desquels des données d'environnement de véhicule suiveur (203) peuvent être saisies et
- un dispositif de commande de véhicule suiveur (23), au moyen duquel le véhicule suiveur (2) peut être commandé le long de la trajectoire de consigne (204) ;
dans lequel
- au moins une similitude de trajectoire avec la trajectoire d'éclaireur générée peut être déterminée au moyen respectivement de la trajectoire réelle (201) saisie et de la trajectoire de consigne (204) générée,
- la trajectoire d'éclaireur et les données d'environnement d'éclaireur (202) peuvent être transmises au véhicule suiveur (1),
- une similitude de données d'environnement peut être déterminée au moyen des données d'environnement de véhicule suiveur (203) et des données d'environnement d'éclaireur (202) et
- en fonction de la similitude de données d'environnement, une commande automatique du véhicule suiveur (2) le long de la trajectoire de consigne (204) peut être activée.

13. Système selon la revendication 12,
**caractérisé en ce que**
en outre, des données d'environnement de véhicule suiveur (204) peuvent être transmises au véhicule éclaireur (1) et des données de commande peuvent être transmises au véhicule suiveur (2) à partir du véhicule éclaireur (1).

14. Système selon l'une quelconque des revendications 12 et 13, **caractérisé en ce que**
en outre, un serveur (3) externe est compris, lequel est connecté au moins occasionnellement pour transmission de données avec le véhicule éclaireur (1) et/ou avec le véhicule suiveur (2), à travers lequel des données concernant la trajectoire d'éclaireur et/ou des données d'environnement d'éclaireur (202) et/ou des données d'environnement de véhicule suiveur (203) peuvent être enregistrées.

15. Système selon l'une quelconque des revendications 12 à 14, **caractérisé en ce que**
la trajectoire d'éclaireur et la trajectoire de consigne (204) sont générées à travers la feuille de route d'éclaireur (12) et la feuille de route de véhicule suiveur (22) de manière à être essentiellement identiques.
